Europäisches Patentamt

European Patent Office

Office européen des brevets

(19)

(11)  **EP 1 162 888 B1**

(12)  ## EUROPÄISCHE PATENTSCHRIFT

(45) Veröffentlichungstag und Bekanntmachung des Hinweises auf die Patenterteilung:
**15.10.2003  Patentblatt 2003/42**

(21) Anmeldenummer: 00912583.2

(22) Anmeldetag: **10.03.2000**

(51) Int Cl.⁷: **A23C 3/033**, A23L 3/22

(86) Internationale Anmeldenummer:
**PCT/EP00/02087**

(87) Internationale Veröffentlichungsnummer:
**WO 00/056160 (28.09.2000 Gazette 2000/39)**

(54) **VERFAHREN ZUM ABTÖTEN SCHÄDLICHER MIKROORGANISMEN IN FLÜSSIGKEITEN DURCH KURZZEITIGES HOCHERHITZEN**

METHOD FOR DESTROYING HARMFUL MICRO-ORGANISMS IN LIQUIDS BY SHORT-TIME HIGH-TEMPERATURE HEATING

PROCEDE PERMETTANT DE TUER LES MICROORGANISMES NUISIBLES CONTENUS DANS DES LIQUIDES PAR TRAITEMEMT A HAUTE TEMPERATURE DE COURTE DUREE

(84) Benannte Vertragsstaaten:
**AT BE CH CY DE DK ES FI FR GB GR IE IT LI LU MC NL PT SE**

(30) Priorität: **19.03.1999  DE 19912541**

(43) Veröffentlichungstag der Anmeldung:
**19.12.2001  Patentblatt 2001/51**

(73) Patentinhaber: **Forschungszentrum Karlsruhe GmbH**
**76133 Karlsruhe (DE)**

(72) Erfinder:
• **SCHUBERT, Klaus**
  **D-76227 Karlsruhe (DE)**
• **FICHTNER, Maximilian**
  **D-68723 Oftersheim (DE)**

(56) Entgegenhaltungen:
**EP-A- 0 722 075         DE-A- 19 608 824**
**US-A- 4 975 246         US-A- 5 152 060**

• **F. DANNENBERG: "Application of reaction kenetics to the denaturation of whey proteins in heated milk" MILCHWISSENSCHAFT, Bd. 43, Nr. 1, 1988, Seiten 3-7, XP002142511 MUNCHEN DE**

**Beschreibung**

Die vorliegende Erfindung betrifft die Verwendung eines Mikrowärmetauschers für ein Verfahren zum Abtöten schädlicher Mikroorganismen in Flüssigkeiten durch kurzzeitiges Hocherhitzen, z. B. durch Ultrahocherhitzen von flüssigen Lebensmitteln wie Milch oder anderen Flüssigkeiten in drei Schritten, wobei die Flüssigkeit zuerst erhitzt, anschließend für einen bestimmten Zeitraum auf dieser Temperatur gehalten und danach abgekühlt wird.

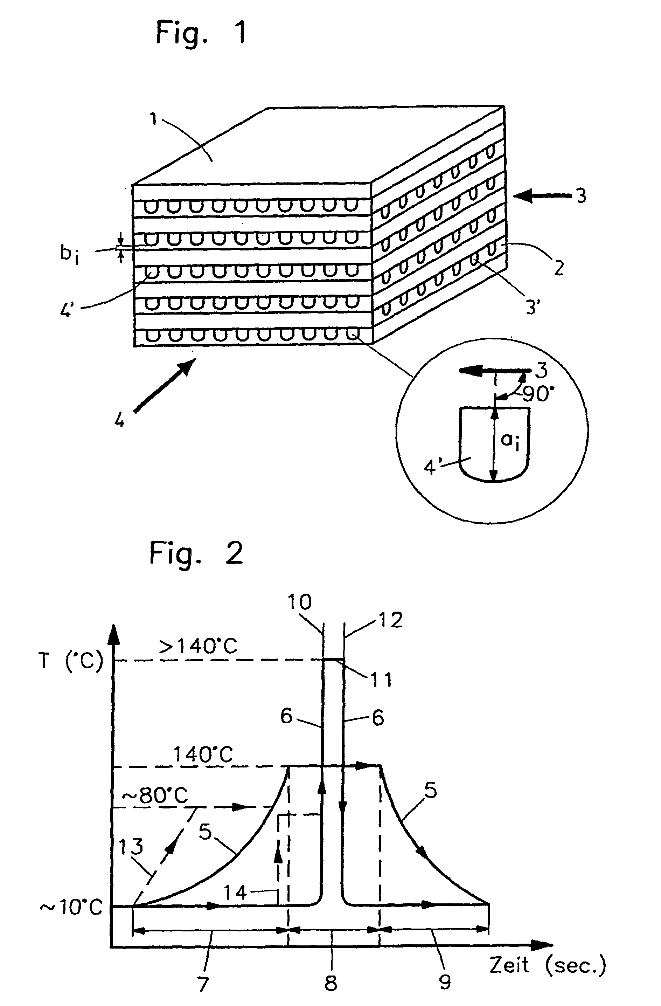

Bisher ist es üblich, schädliche Mikroorganismen in Flüssigkeiten, insbesondere in flüssigen Lebensmitteln, durch eine Hitzebehandlung wie Pasteurisieren, Sterilisieren, Ultrahocherhitzen oder ähnliche Verfahren abzutöten. Dadurch wird die Qualität und die Haltbarkeit des Produktes verbessert. Im einzelnen laufen diese Verfahren so ab, daß die Flüssigkeit, z. B... Milch, zunächst erhitzt; anschließend für einen bestimmten Zeitraum auf dieser Temperatur gehalten und danach abgekühlt wird. Dazu werden neben der Dampfinjektion zur Wärmeübertragung konventionelle Röhren- oder Plattenwärmetauscher verwendet, wobei infolge derer Geometrie oft stark unterschiedliche Verweilzeiten der Produkte. in dem Wärmetauscher gegeben sind. Dabei können im Produkt. Hitzeschäden infolge geringer Geschwindigkeit in den wandnahen Zonen auftreten. Die damit erreichten Aufheiz- und Abkühlzeiten sowie die Temperaturen werden später anhand der Figur 2 erläutert. Im Laborversuchsmaßstab wurde auch schon mehrere Kapillarrohre zur Aufheizung verwendet, die einen Durchmesser von 1 bis 3 mm aufwiesen. Solche Kapillarrohre sind jedoch für die Aufheizung größerer Durchsätze bei einer großtechnischen Produktion nicht geeignet.

EP-A-0 722 075 offenbart einen Röhrenwärmetauscher, welcher zur Sterilisation von Flüssigkeiten, die mit Mikroorganismen kontaminiert sind, Verwendung findet. Er zeichnet sich dadurch aus, dass sowohl alle Röhren zum Durchleiten der Flüssigkeit als auch all deren Zu- und Ableitungskanäle im Wärmetauscher eine identische Länge und einen identischen Querschnitt aufweisen, wodurch die Verweilzeit der Flüssigkeit in den Röhren des Wärmetauscher in sehr engen Grenzen gehalten wird. Die Röhren werden dann von einem flüssigen, dampf- oder gasförmigen Heizmedium, welches über zwei Stutzen durch das Gehäuse des Wärmetauschers ohne weitere Strömungsführungseinrichtungen geleitet wird, temperiert. Durch eine zusätzliche Gestaltung der Querschnitte, Dimensionen und Führung der Röhren im Gehäuse ist eine erhebliche Effizienzsteigerung des Röhrenwärmetauschers erzielbar, wobei eine Flüssigkeit in den Röhren in zehntel Sekunden auf 140°C aufheizbar ist. Ein Hintereinanderschalten von mehreren derartigen Röhrenwärmetauschern ermöglicht eine dreistufige Wärmebehandlung von Flüssigkeiten mit Aufheiz-, Halte- und Kühlstufe. Als eine weitere Effizienzsteigerung wird empfohlen, die einzelnen Röhrenwärmetauscher dabei ohne zwischengeschaltete Zu- und Ableitungskanäle einzusetzen. Ferner wird grundsätzlich auf die Möglichkeit einer. Parallelschaltung mehrerer Wärmetauscher zur Erhöhung des Durchsatzes an Flüssigkeit hingewiesen.

Davon ausgehend liegt die Aufgabe der Erfindung darin, einen weiteren, prinzipbedingt noch effektiveren Wärmetauscher zum Abtöten schädlicher Mikroorganismen in Flüssigkeiten durch kurzzeitiges. Hocherhitzen ohne Erhitzung durch direkte Dampfzufuhr, z. B. durch Ultrahocherhitzen von flüssigen Lebensmitteln wie Milch oder anderen Flüssigkeiten unter Erhalt der in der Flüssigkeit enthaltenen Wertstoffe vorzuschlagen, welcher einerseits ein sehr kurzzeitiges Aufheizen der Flüssigkeit auf Temperaturbereiche über 140° C und ein anschließendes Abkühlen dieser jeweils im Milli- bis Hundertstelsekundenbereich ermöglicht.

Zur Lösung dieser Aufgabe schlägt die vorliegende Erfindung die Verwendung eines Wärmetauschers für ein Verfahren vor, wie sie im Patentanspruches 1 angeführt ist.

Einzelheiten des erfindungsgemäßen Verwendung werden im folgenden und anhand der Figuren 1 und 2 näher erläutert :

Es zeigen:

die Figur 1 den prinzipiellen Aufbau eines Mikrowärmetauschers,

die Figur 2 den Temperaturverlauf des Verfahrens gegenüber dem Stand der Technik.

Die Figur 1 zeigt den prinzipiellen Aufbau eines Mikrowärmetauschers 1 zur Erläuterung seiner Funktionsweise. Er besteht aus einem Stapel diffusionsverschweißter Metallfolien 2 mit Foliendicken von z. B. 100 μm. In diese Metallfolien werden mit Hilfe formgeschliffener Werkzeuge parallel zueinander verlaufende Mikrokanäle 4 für die Fluidpassage 4 der zu erhitzenden Flüssigkeit und Mikrokanäle 3' für die Fluidpassage 3 eines Kühlmittel eingebracht. Die minimal zu realisierenden Kanalabmessungen liegen im Bereich von 10μm.

Die geometrische Form der Mikrokanäle 3' und 4' ist frei wählbar. So sind zum Beispiel Rechteck- sowie auch kreisförmige Querschnitte möglich. Die Mikrokanäle 3' und 4' können unterschiedliche Abmessungen aufweisen. Um gleiche Durchflußmengenströme in den einzelnen Mikrokanälen einer Fluidpassage zu gewährleisten, sind die Mikrokanäle einer solchen Fluidpassage untereinander gleich. Der charakteristische hydraulische Kanaldurchmesser von Mikrokanälen der Fluidpassage i (hier i=3 bzw.4) ergibt sich aus der Beziehung:

$$d_i = 4A_i/U_i, \text{ wobei}$$

$d_i$ = charakteristischer hydraulischer Durchmesser der Kanäle der Fluidpassage i

$A_i$ = durchströmter Kanalquerschnitt der Fluidpassage i

$U_i$ = benetzter Kanalumfang der Fluidpassage i

i = Index für die Fluidpassage

ist. Die Figur 1 zeigt weiter einen als vergrößerten Ausschnitt dargestellten Mikrokanal 4' der Fluidpassage 4 mit der Kanalabmessung $a_i$, wobei $a_i$ die größte Abmessung des Mikrokanales 4' senkrecht zur Kühlmittelpassage 3 ist. Weiterhin ist die kleinste Wandstärke $b_i$, das heisst der geringste Abstand zwischen den beiden Fluidpassagen 3 und 4 eingezeichnet.

Mikrowärmetauscher sind allgemein dadurch gekennzeichnet, daß entweder

- die charakteristischen hydraulischen Kanldurchmesser $d_i$ (hier: i=3 und 4) oder
- die Kanalabmessungen $a_i$

aller Mikrokanäle zumindest einer Fluidpassage i kleiner 1000 µm sind. Die kleinste Wandstärke $b_i$ zwischen den einzelnen Fluidpassagen ist ebenfalls kleiner 1000 µm, vorzugsweise kleiner 200 µm zu wählen. Diese Aussagen gelten auch für den Fall, daß die Mikrokanäle einer Fluidpassage i untereinander unterschiedlich groß sind.

Die einzelnen Metallfolien 2 werden bei dem Ausführungsbeispiel gemäß der Figur 1 so übereinander gestapelt, daß die Mikrokanäle 3' und 4' zweier benachbarter Fluidpassagen unter 90° zueinander verlaufen (Kreuzstrom-Mikrowärmetauscher) und heliumdicht gegeneinander abgedichtet sind. Neben der in der Figur 1 dargestellten Kreuzstromführung sind auch andere typische Strömungsführungen wie Gleich- und Gegenstromführung und alle Kombinationen daraus realisierbar. Die deutliche Erhöhung der Wärmeübertragungsleistung im Mikrowärmetauscher beruht darauf, daß durch die kleinen hydraulischen Kanaldurchmesser $d_i$, vor allem aber durch die kleinen Kanalabmessungen $a_i$, die Transportwege für die zwischen den Fluidpassagen 3' und 4' zu übertragenden Wärmeströme sehr kurz sind. Gegenüber Wämedurchgangskoeffizienten von ca. 1000 W/K m in konventionellen Wärmetauschern ergeben sich in Mikrowärmetauschern Werte in der Größenordnung 20000 W/K m (beide Fluidpassagen 3' und 4': $d_i$ = 80 µm, $a_i$ = 70 µm). Die spezifische Wärmeübertragungsfläche kann Werte größer 100 $cm^2/cm^3$ erreichen gegenüber ca. 1 $cm^2/cm^3$ in konventionellen Rohrbündelwärmetauschern. Daraus resultiert insgesamt eine Steigerung der volumenspezifischen Wärmeübertragungsleistung um mindestens einen Faktor 100.

Aus gewonnenen experimentellen Daten solcher Mikrowärmetauscher 1 ergeben sich Verweilzeiten herunter bis zu wenigen Millisekunden sowie Aufheiz- und Abkühlraten von bis zu 10000K pro Sekunde. Daher kann ein Flüssigkeitsstrom von 400 kg/h in einem Mikrowärmetauscher von 1.$cm^3$ aktivem Volumen bei 6 bar Eimtritts- und 1 bar Austrittsdruck in 3 Millisekunden um 30°K erhitzt oder abgekühlt werden. Für einen größeren Mikrowärmetauscher mit 27 $cm^3$ aktivem Volumen ergeben sich ein Durchsätze von ca. 4000 kg/h. Unter dem aktiven Volumen eines Mikrowärmetauschers ist das Volumen im Inneren des Wärmetauschers zu verstehen, in welchem die Mikrokanäle verlaufen, wobei das Volumen von Deck- und Seitenplatten sowie das der Anschlüsse nicht mitgerechnet ist.

Das neue Verfahren besteht nun im wesentlichern darin, daß die Flüssigkeit mit den schädliche Mikroorganismen zu dem kurzzeitiges Hocherhitzen, wie z. B.zum Ultrahocherhitzen von flüssigen Lebensmitteln wie Milch im ersten Schritt in bzw. durch einen solchen Mikrowärmetauscher 1 gemäß der Figur 1 mit bis zu etwa 10000 Mikrokanälen pro $cm^3$ aktivem Wärmetauschervolumen in einem extrem kurzen Zeitintervall mit einem Gradienten von mindestens 200 K/sec erhitzt wird, im zweiten Schritt in einem Zeitintervall von <2sec auf dieser Temperatur gehalten und in einem dritten Schritt wiederum in bzw. durch einen weiteren Mikrowärmetauscher in einem extrem kurzen Zeitintervall mit einem Gradienten von mindestens 200 K/sec wieder abgekühlt wird. Dabei kann im zweiten Schritt ebenfalls durch einen Mikrowärmetauscher der angegebenen Art Wärme noch zusätzlich Wärme zum Halten der Temperatur zugeführt werden. Im praktischen Fall wird dabei die Flüssigkeit in einem Zeitintervall von etwa 0,2 bis 0,3 sec auf eine Temperatur zwischen 140° und 200°C und in demselben Zeitintervall von etwa 0,2 bis 0,3 sec wieder abgekühlt.

Das Verfahren ist in der Figur 2 im Vergleich zum Stand der Technik graphisch im prinzipiellen Verlauf dargestellt. 5 zeigt den Temperaturverlauf über der Zeit bei den Verfahren nach dem Stand der Technik und 6 den bei dem Verfahren nach der Erfindung. Beide Kurven 5 und 6 gehen von einer Ausgangstemperatur von etwa 10°C aus, wobei aber auch von höheren Vorwärmtemperaturen von bis zu etwa 80°C, -gestrichelter Kurververlauf 13 und 14 -, ausgegangen werden kann. Solche Vorwärmtemperaturen können konventionell oder, wie bei der Kurve 6 für das neue Verfahren dargestellt, im Milli- oder Hundertstelsekundenbereich ebenfalls durch einen Mikrowärmetauscher erzeugt werden. Bei der Kurve 5 nach dem Stand der Technik sieht man einen relativ langsamen Anstieg der Temperatur im Bereich von mehreren Sekunden beim Aufheizen 7, eine Haltezeit 8 und einen mehrere Sekunden langen Temperaturabfall beim Abkühlen 9. Der Kurvenverlauf 6 zeigt dem gegenübergestellt die entsprechenden Werte des neuen Verfahrens, eine sehr kurze Aufheizzeit 10 von wenigen Milli- oder Hundertstelsekunden, eine Haltezeit 11 von unter einer Sekunde und eine Abkühlzeit 12 ebenfalls im Milli- oder Hundertstelsekundenbereich.

Das Verfahren sieht demnach vor, daß zur Erreichung des gesetzten Zieles Mikrostrukturapparate in Form von Mikrowärmetauschern verwendet werden.

Dadurch lassen sich die Flüssigkeiten in kürzester Zeit, wie in dem angegebenen Zeitraum von Milli- bzw. Hundertstelsekunden aufheizen und wieder abkühlen. Da für die Hochtemperaturbehandlung von Flüssigkeiten zur Abtötung von Mikroorganismen gilt, daß mit abnehmender Einwirkzeit die Behandlungstemperatur gesteigert werden kann, kann das erfindungsgemäße Verfahren bei sehr hohen Temperaturen in Bereichen von 200° C mit sehr kurzen Einwirkzeiten durchgeführt werden. Wenn die zu behandelnde Flüssigkeit zum Beispiel Milch ist kann durch das neue Verfahren die Haltbarkeit der Milch verlängert und gleichzeitig eine Qualitätssteigerung, etwa in Form eines verbesserten Milchgeschmackes erreicht werden. Der Grund hierfür liegt darin, daß bei der kurzen sehr hohen Erwärmung der Milch die schädlichen Mikroorganismen vollständig abgetötet werden, die Wertstoffe jedoch erhalten bleiben. Dabei ist das neue Verfahren nicht auf bestimmte Flüssigkeiten beschränkt, es kann neben der bereits erwähnten Milch auch für andere empfindliche Flüssigkeiten, flüssige Lebensmittel wie Säfte zur Entkeimung, Proteinlösungen, physiologische Lösungen und andere eingesetzt werden. Denkbar ist auch ein Einsatz bei biologischen oder pharmazeutischen Flüssigkeiten wie Blutplasma, bei denen eine Virusinaktivierung vorgenommen werden soll.

Bezugszeichenliste:

| | |
|---|---|
| 1 | Mikrowärmetauscher |
| 2 | Metallfolien |
| 3,3' | Mikrokanäle, Fluidpassagen |
| 4,4' | Mikrokanäle, Fluidpassagen |
| 5 | Temperaturverlauf Stand der Technik |
| 6 | Temperaturverlauf Erfindung |
| 7 | Aufheizzeit Stand der Technik |
| 8 | Haltezeit Stand der Technik |
| 9 | Abkühlzeit Stand der Technik |
| 10 | Aufheizzeit Erfindung |
| 11 | Haltezeit Erfindung |
| 12 | Abkühlzeit Erfindung |
| 13 | Vorheizung Stand der Technik |
| 14 | Vorheizung Erfindung |

**Patentansprüche**

1. Verwendung eines Mikrowärmetauschers mit bis zu etwa 10000 Mikrokanälen pro cm³ aktivem Wärmetauschervolumen, der hergestellt worden ist durch das Einbringen parallel zueinander verlaufender Mikrokanäle in einer Metallfolie sowie Stapeln und Diffusionsverschweißen mehrerer dieser Metallfolien übereinander, für ein Verfahren zum Abtöten schädlicher Mikroorganismen in Flüssigkeiten durch kurzzeitiges Hocherhitzen, insbesondere durch Ultrahocherhitzen von flüssigen Lebensmitteln wie Milch oder anderen Flüssigkeiten in drei Schritten, wobei die Flüssigkeit zuerst erhitzt, anschließend für einen bestimmten Zeitraum auf dieser Temperatur gehalten und danach abgekühlt wird, wobei

die Flüssigkeit im ersten Schritt mit einem Gradienten von mindestens 200 K/sec erhitzt wird, im zweiten Schritt in einem Zeitintervall von < 2 sec. auf dieser Temperatur gehalten und in einem dritten Schritt durch einen weiteren Mikrowärmetauscher mit einem Gradienten von mindestens 200 K/sec wieder abgekühlt wird.

2. Verwendung nach Anspruch 1, **dadurch gekennzeichnet, dass** im zweiten Schritt ebenfalls durch einen weiteren Mikro-Wärmetauscher (1) Wärme zusätzlich Wärme zum Halten der Temperatur zugeführt wird.

3. Verwendung nach Anspruch 1 oder 2, **dadurch gekennzeichnet, dass** die Flüssigkeit in einem Zeitintervall von etwa 0,2 bis 0,3 sec auf eine Temperatur zwischen 140° und 200°C und in demselben Zeitintervall von etwa 0,2 bis 0,3 sec wieder abgekühlt wird.

**Claims**

1. Use of a micro heat exchanger having a heat exchanger volume which is active up to about 10000 microchannels per cm³ and has been produced by introducing microchannels, which extend parallel to one another, in a metal foil and by stacking and diffusion-welding a plurality of these metal foils one above the other, for a method of destroying harmful microorganisms in liquids by temporarily highly heating, more especially by ultra-highly heating, liquid foodstuffs, such as milk or other liquids, in three steps, the liquid initially being heated, then being maintained at this temperature for a predetermined period of time and subsequently being cooled, wherein the liquid is heated in the first step with a gradient of at least 200 K/sec, maintained at this temperature in the second step in a time interval of < 2 sec and cooled again in a third step by an additional micro heat exchanger with a gradient of at least 200 K/sec.

2. Use according to claim 1, **characterised in that** heat for maintaining the temperature is additionally supplied in the second step also by an additional micro heat exchanger (1).

3. Use according to claim 1 or 2, **characterised in that** the liquid is heated to a temperature between 140° and 200° C in a time interval of about 0.2 to 0.3 sec and cooled again in the same time interval of about 0.2 to 0.3 sec.

**Revendications**

1.  Utilisation d'un micro-échangeur de chaleur avec jusqu'à environ 10000 micro-canaux par cm$^3$ de volume actif d'échangeur de chaleur, qui a été fabriqué par la formation de micro-canaux parallèles l'un à l'autre dans une feuille métallique, et par l'empilement et le soudage par diffusion de plusieurs de ces feuilles métalliques les unes au-dessus des autres, pour un procédé destiné à détruire des micro-organismes toxiques dans des liquides par chauffage de courte durée à haute température, en particulier par chauffage à ultra-haute température de denrées alimentaires liquides comme le lait ou d'autres liquides en trois étapes, le liquide étant d'abord chauffé à haute température, ensuite maintenu à cette température pendant un temps déterminé puis refroidi,
    dans laquelle
    le liquide est chauffé pendant la première étape avec un gradient d'au moins 200 K/s, est maintenu à cette température au cours de la deuxième étape pendant un intervalle de temps de < 2 sec, et à nouveau refroidi au cours d'une troisième étape par un autre micro-échangeur de chaleur avec un gradient d'au moins 200 K/s.

2.  Utilisation selon la revendication 1,
    **caractérisée en ce qu'**
    au cours de la deuxième étape, de la chaleur est ajoutée en plus par un micro-échangeur de chaleur (1) pour maintenir la température.

3.  Utilisation selon la revendication 1 ou 2,
    **caractérisée en ce que**
    le liquide est refroidi dans un intervalle de temps d'environ 0,2 à 0,3 sec à une température entre 140° et 200° C et est à nouveau refroidi dans le même intervalle de temps d'environ 0,2 à 0,3 sec.

## Fig. 1

## Fig. 2